(19) Europäisches Patentamt
European Patent Office
Office européen des brevets

(11) **EP 4 395 063 A1**

(12) **DEMANDE DE BREVET EUROPEEN**

(43) Date de publication:
**03.07.2024 Bulletin 2024/27**

(21) Numéro de dépôt: **23218085.1**

(22) Date de dépôt: **19.12.2023**

(51) Classification Internationale des Brevets (IPC):
**H01P 1/203** (2006.01)

(52) Classification Coopérative des Brevets (CPC):
**H01P 1/20345**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **29.12.2022 FR 2214618**

(71) Demandeurs:
• **THALES**
**92190 Meudon (FR)**
• **Institut National des Sciences Appliquées de Rennes**
**35708 Rennes Cedex 7 (FR)**
• **Université de Rennes**
**35042 Rennes (FR)**

• **Centre National de la Recherche Scientifique**
**75016 Paris (FR)**
• **CentraleSupélec**
**91190 Gif-sur-Yvette (FR)**
• **Nantes Université**
**44035 Nantes Cedex 1 (FR)**

(72) Inventeurs:
• **CAILLEUX, Aymeric**
**53005 Laval Cedex (FR)**
• **HOGOMMAT-CHABROT, Laure**
**53005 Laval Cedex (FR)**
• **FOURN, Erwan**
**35708 Rennes Cedex 7 (FR)**

(74) Mandataire: **Atout PI Laplace**
**Immeuble Up On**
**25 Boulevard Romain Rolland**
**CS 40072**
**75685 Paris Cedex 14 (FR)**

(54) **FILTRE BI BANDE POUR CHAÎNE DE RÉCEPTION IFF/ADS-B**

(57) L'invention concerne un filtre analogique bi-bande (300) passant pour des signaux IFF et des signaux ADS-B dans une première et une deuxième bande de fréquence, et pour rejeter des signaux reçus en dehors de ces bandes, réalisé en technologie multi-planaire, et comprenant successivement :
- une couche (301) comprenant un port d'entrée et un port de sortie,
- une couche (302) comprenant un plan de masse présentant des ouvertures en regard avec le port d'entrée et le port de sortie,
- une couche (303) comprenant N résonateurs passe-bande (921 à 926),
- une couche (304) comprenant N résonateurs coupe-bande (931 à 936), disposés de sorte que :
- les résonateurs passe-bande sont reliés deux-à-deux par couplage,
- le premier et le dernier résonateur passe-bande sont reliés par couplage électromagnétique avec le port d'entrée et le port de sortie,
- chaque résonateur passe-bande est relié par couplage électromagnétique à un résonateur coupe-bande.

[Fig. 8]

FIG.8

[Fig. 9]

FIG.9

## Description

## Domaine technique :

L'invention se situe dans le domaine du contrôle aérien et des dispositifs d'anticollisions pour le trafic aérien. Elle porte plus spécifiquement sur un filtre analogique bi-bande utilisable dans une chaîne de réception configurée pour permettre la réception simultanée et sur des fréquences distinctes d'interrogations IFF (sigle anglais pour *Identification Friend of Foe,* ou identification ami ennemi) et d'interrogations ADS-B (sigle anglais pour *Automatic Dependent Surveillance-Broadcast).* Le filtre bi-bande selon l'invention doit répondre à des contraintes fortes de rejection de signaux tiers et de volume.

## Technique antérieure :

L'IFF est un système d'identification chiffré d'aéronefs, permettant aux radars d'approche civils ou militaire de reconnaitre les avions coopérants, dits « amis », et de déterminer leur cap et distance. L'IFF est également utilisé en vol dans des avions militaires pour identifier les avions amis et ennemis. Les interrogations IFF sont faites par des stations sol ou des aéronefs sur une bande de fréquence centrée autour de la fréquence 1030 MHz, typiquement de 14 MHz.

L'ADS-B est un système de surveillance coopératif pour le contrôle de trafic aérien. Un avion équipé de l'ADS-B détermine sa position par un système de positionnement par satellite (GNSS, sigle anglais pour *Global Navigation Satellite System*) et l'envoie périodiquement aux stations sol et aux autres appareils évoluant à proximité. La cadence d'émission de la position dépend de la phase du vol. Les émissions ADS-B se font sur une bande de fréquence centrée autour de la fréquence 1090 MHz, typiquement de 16 MHz.

La plupart des aéronefs, en particulier les avions, embarquent les équipements nécessaires pour implémenter ces deux standards, en particulier les équipements nécessaires pour écouter l'IFF sur la fréquence 1030 MHz et l'ADS-B sur la fréquence 1090 MHZ.

Ces équipements de réception sont soumis à des contraintes fortes de performances par les normes DO-260 B ou C (pour l'ADS-B), AIMS 03-1000 (pour l'IFF), et ED73 E ou F (ADS-B). Les contraintes portent en particulier sur des niveaux de rejection minimum pour les chaînes radio de réception. En particulier, les niveaux de rejection à atteindre sont très forts (supérieurs à 60 dB) sur la bande 1053 MHz - 1065 MHz qui se trouve entre la fréquence de réception de l'IFF et celle de l'ADS-B.

Afin de répondre à ces contraintes fortes de rejection, les aéronefs de l'état de l'art embarquent généralement des équipements distincts pour l'IFF et l'ADS-B. Ces équipements ont des filtres analogiques de tête conçus pour atteindre les niveaux de rejection définis par les normes, conçus en cascadant un nombre important de filtres passe-bande de technologies diverses : filtres à cavités céramique, filtres SAW (sigle anglais pour *Surface Acoustic Waves,* ou filtre à ondes de surface), filtres BAW (sigle anglais pour *Bulk Acoustic Wave,* ou filtre à ondes de volume), etc.

Certains équipements, comme le TSC4000 de Thales, réalisent la réception des interrogations IFF et des messages ADS-B dans le même équipement. Cependant, ces réceptions se font sur deux chaines radio séparées.

Embarquer deux équipements de réception distincts ou un équipement avec deux chaînes de réception séparées dans un aéronef pour réaliser les fonctions de réception IFF et de réception ADS-B a des conséquences évidentes en termes de volume et de poids, qui peuvent ne pas être compatibles d'aéronefs de petites tailles. En outre, la consommation des équipements n'est pas optimale, ce qui est un inconvénient majeur pour les applications de type drone. Enfin, les composants de chaque chaîne de réception sont relativement chers, et plus leur nombre est élevé, plus le cout série est important.

Pour cette raison, la demanderesse a déposé la demande de brevet FR 2214616, portant sur une chaîne de réception permettant de recevoir en continu les interrogations IFF autour de la fréquence 1030 MHz et les émissions ADS-B autour de la fréquence 1090 MHz, tout en respectant les contraintes normatives associées à ces réceptions.

Concevoir une chaîne radio permettant la réception simultanée des signaux IFF et ADS-B, avec un filtrage stable dans les bandes de fréquences d'intérêt et respectant les contraintes normatives sur les niveaux de rejection des signaux en dehors de ces bandes, se révèle être particulièrement difficile. S'il est possible de concevoir des filtres analogiques permettant d'atteindre les niveaux de rejection souhaités autour de l'une ou l'autre des bandes de fréquences IFF ou ADS-S, concevoir des filtres analogiques passants et stables simultanément autour des deux fréquences d'intérêt tout en garantissant les niveaux de rejection requis à l'extérieur de ces bandes (supérieure à 60dB), en particulier dans la bande de fréquence située entre la bande IFF et la bande ADS-B, requiert l'utilisation de filtres d'ordres particulièrement élevés. De tels filtres sont particulièrement complexes et coûteux à produire, présentent des problèmes d'ondulation dans la bande, et ont un poids et un volume importants.

La réalisation d'un filtre numérique d'ordre élevé passant et stable sur les deux bandes de fréquences d'intérêt et ayant les propriétés de rejection souhaitées est théoriquement possible. Cependant, un tel filtre serait positionné dans la chaîne de réception après le convertisseur analogique-numérique, qui par conséquent ne serait pas protégé contre les émissions de fort niveau ayant lieu dans des bandes de fréquences proches de celles de l'IFF et de l'ADS-B, en particulier celles ayant lieu dans la bande de fréquence située entre les deux bandes d'intérêt. Ces émissions non rejetées peuvent avoir pour effet de faire travailler le CAN à saturation. En pratique, la saturation du CAN conduit à une distorsion non linéaire qui *a minima* crée un bruit spectral large bande, ce qui détruit la dynamique du récepteur, et au pire va entrainer une détérioration de celui-ci.

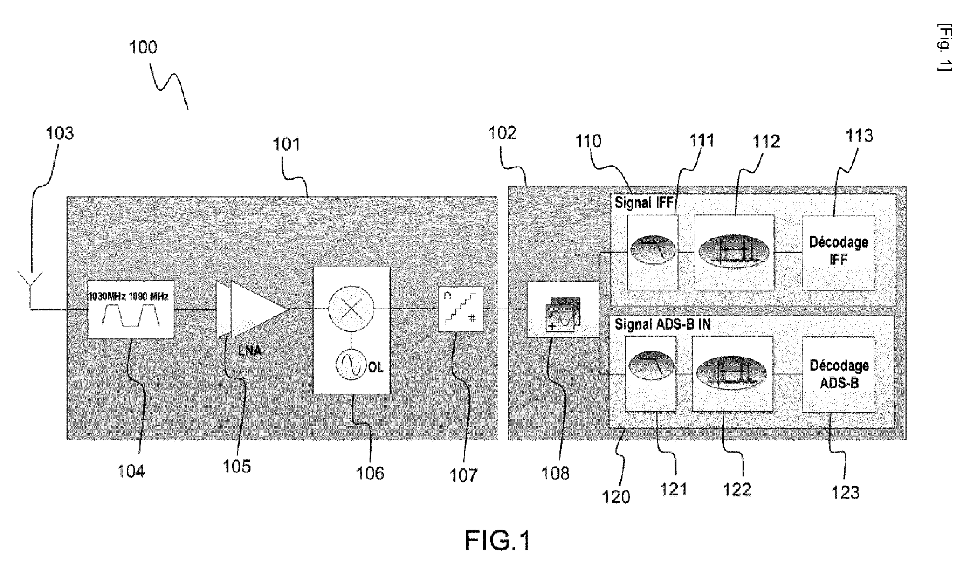

Pour ces raisons, l'invention objet de la demande de FR 2214616 définit une chaîne de réception radio hybride analogique/numérique permettant de recevoir simultanément les signaux IFF et les signaux ADS-B. La figure 1 représente schématiquement les principaux éléments de cette chaîne de réception. Elle comprend une partie analogique 101 avec :

- une antenne 103 configurée pour recevoir sur une bande de fréquence comprenant la bande de fréquences IFF (bande centrée autour de la fréquence 1030 MHz) et la bande de fréquences ADS-B (bande centrée autour de la fréquence 1090 MHz),

- un dispositif de filtrage bi-bande 104 configuré pour filtrer le signal radiofréquence acquis sur l'antenne de réception 101, avantageusement un filtre bi-bande passant autour des bandes de fréquences des signaux IFF (centrés autour de 1030 MHz) et ADS-B (centrés autour de 1090 MHz) tout en rejetant les signaux à l'extérieur de ces bandes, en particulier ceux situés dans la bande de fréquence intermédiaire,

- un amplificateur faible bruit 105 configuré pour amplifier le signal reçu sur l'antenne,

- un mélangeur 106, configuré pour mélanger les signaux amplifiés avec un signal sinusoïdal de manière à transposer les signaux IFF et ADS-B vers une fréquence inférieure compatible de la bande de fonctionnement du convertisseur analogique-numérique (CAN) 107,

- un convertisseur analogique-numérique 107.

Elle comprend également une partie numérique 102 configurée pour dupliquer (108) les signaux numérisés par le CAN, et pour traiter les signaux dupliqués respectivement par un chemin de traitement 110 pour la réception des signaux IFF et par un chemin de traitement 120 pour la réception des signaux ADS-B.

Le chemin IFF 110 comprend un filtre numérique 111 et un démodulateur I/Q 112, configurés pour rejeter les signaux autour du signal IFF et transposer le signal IFF vers la bande de base. Les positions du filtre numérique 111 et du démodulateur 112 peuvent être inversées. Il comprend ensuite des moyens de traitements 113 des échantillons démodulés, configurés pour décoder les signaux IFF.

Le chemin ADS-B 120 comprend un filtre numérique 121, et un démodulateur I/Q 122, configurés pour rejeter les signaux autour du signal ADS-B et transposer le signal ADS-B vers la bande de base. Les positions du filtre numérique 121 et du démodulateur 122 peuvent être inversées. Il comprend ensuite des moyens de traitements 123 des échantillons démodulés, configurés pour décoder les signaux ADS-B.

Le dispositif de filtrage bi-bande 104, le filtre numérique 111 du chemin IFF et le filtre numérique 121 du chemin ADS-B contribuent ensemble au filtrage des signaux reçus, et en particulier au respect des contraintes de rejection définies par les normes DO-260, AIMS 03-1000 et ED73. En particulier :

- le premier niveau de filtrage analogique bi-bande 104 est destiné à apporter une partie de la rejection souhaitée des signaux situés en dehors des bandes d'intérêt, en particulier ceux reçus entre le signal IFF et le signal ADS-B, afin d'éviter la saturation du CAN lié à des rayonnements non essentiels,

- le deuxième niveau de filtrage numérique 111 et 121, adapté à l'un ou l'autre des signaux d'intérêt, est configuré de sorte que les deux niveaux de filtrage permettent ensemble d'atteindre les exigences normatives.

Ainsi, le dispositif de filtrage bi-bande 104 contribue à la réjection des signaux hors des bandes IFF et ADS-B, mais n'est pas tenu par les contraintes définies par les normes, c'est pourquoi son gabarit peut être plus relâché, rendant ainsi la réalisation d'un tel filtre analogique possible dans des dimensions réduites. Le filtre doit cependant rejeter suffisamment les bandes adjacentes, en particulier la bande de fréquence située entre la bande IFF et la bande ADS-B, pour éviter le phénomène de saturation du CAN dû à des rayonnements non essentiels. Un but de l'invention est de définir un tel filtre.

**Résumé de l'invention :**

A cet effet, la présente invention décrit un filtre analogique bi-bande configuré pour être passant pour des signaux IFF reçus dans une première bande de fréquence centrée sur la fréquence 1030 MHz et des signaux ADS-B reçus dans une deuxième bande de fréquence centrée sur la fréquence 1090 MHz, et pour rejeter des signaux reçus en dehors de la première bande de fréquence et de la deuxième bande de fréquence, en particulier au moins une bande de fréquence comprise entre la première et la deuxième bande de fréquence.

Le filtre analogique bi-bande selon l'invention est réalisé en technologie multi-planaire, et comprend une pluralité de couches superposées parmi lesquelles successivement :

- une première couche comprenant un port d'entrée et un port de sortie,

- une deuxième couche comprenant un plan de masse présentant des ouvertures en regard avec le port d'entrée et le port de sortie,

- une troisième couche comprenant N résonateurs passe-bande, avec N supérieur ou égal à 1,

- une quatrième couche comprenant N résonateurs coupe-bande.

Les éléments des couches sont disposés de sorte que :

- les N résonateurs passe-bande sont reliés deux-à-deux par couplage électromagnétique,

- le premier résonateur des N résonateurs passe-bande est relié par couplage électromagnétique avec le port d'entrée,

- le dernier résonateur des N résonateurs passe-bande est relié par couplage électromagnétique avec le port de sortie,

- chaque résonateur passe-bande est relié par couplage électromagnétique à un des résonateurs coupe-bande.

Avantageusement, les dimensions des résonateurs passe-bande et des résonateurs coupe-bande sont choisies de manière à ce que chaque couple de résonateur passe-bande/coupe-bande forme un résonateur bi-bande configuré pour être passant dans lesdites première et deuxième bande de fréquence, et pour rejeter des signaux reçus en dehors de ces deux bandes de fréquences, en particulier dans la bande de fréquence comprise entre la premier et la deuxième bande de fréquence.

Selon un mode de réalisation d'un filtre analogique bi-bande selon l'invention, où N est supérieur ou égal à 3, deux résonateurs passe-bande non consécutifs parmi les N résonateurs passe-bande sont reliés par couplage électromagnétique.

Avantageusement, l'écart entre les deux résonateurs passe-bande non consécutifs reliés par couplage électromagnétique est choisi de manière à former des zéros dans la réponse impulsionnelle du filtre positionnés de manière à augmenter la pente sur les bords du filtre. Dans un mode de réalisation, les deux résonateurs passe-bande non consécutifs reliés par couplage électromagnétique sont le premier et le dernier résonateur passe-bande.

Selon un mode de réalisation, le filtre analogique bi-bande selon l'invention est configuré pour rejeter d'au moins 30 dB les signaux reçus dans la bande de fréquence comprise entre la première et la deuxième bande de fréquence.

**Brève description des figures :**

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :

- la figure 1 représente schématiquement une chaîne de réception radio hybride permettant la réception simultanée de signaux IFF et ADS-B telle que définie dans la demande de brevet FR 2214616,

- la figure 2 donne un exemple de gabarit de filtre analogique bi-bande pouvant être utilisé pour la mise en oeuvre d'un récepteur bi-bande IFF/ADS-B,

- la figure 3 représente la structure d'un filtre analogique bi-bande multicouche selon un mode de réalisation de l'invention,

- la figure 4 représente le principe du couplage entre éléments situés dans différentes couches d'un filtre multicouche,

- la figure 5 présente la forme théorique d'un filtre passe-bas en échelle,

- la figure 6a illustre la structure équivalente d'un résonateur bi-bande,

- la figure 6b représente un montage équivalent à celui de la figure 6a,

- la figure 7 représente la structure d'un filtre bi-bande d'ordre N,

- la figure 8 est un schéma de couplage du filtre bi-bande multicouche d'ordre 6 selon le mode de réalisation de l'invention,

- la figure 9 représente une vue de dessus d'un filtre bi-bande multicouche d'ordre N = 6 selon un mode de réalisation de l'invention, dans lequel les différentes couches sont représentées en surimpression,

- la figure 10 représente la réponse fréquentielle théorique du filtre bi-bande multicouche selon le mode de réalisation de l'invention représenté à la figure 9.

Des références identiques peuvent être utilisées dans des figures différentes lorsqu'elles désignent des éléments identiques ou comparables.

**Description détaillée :**

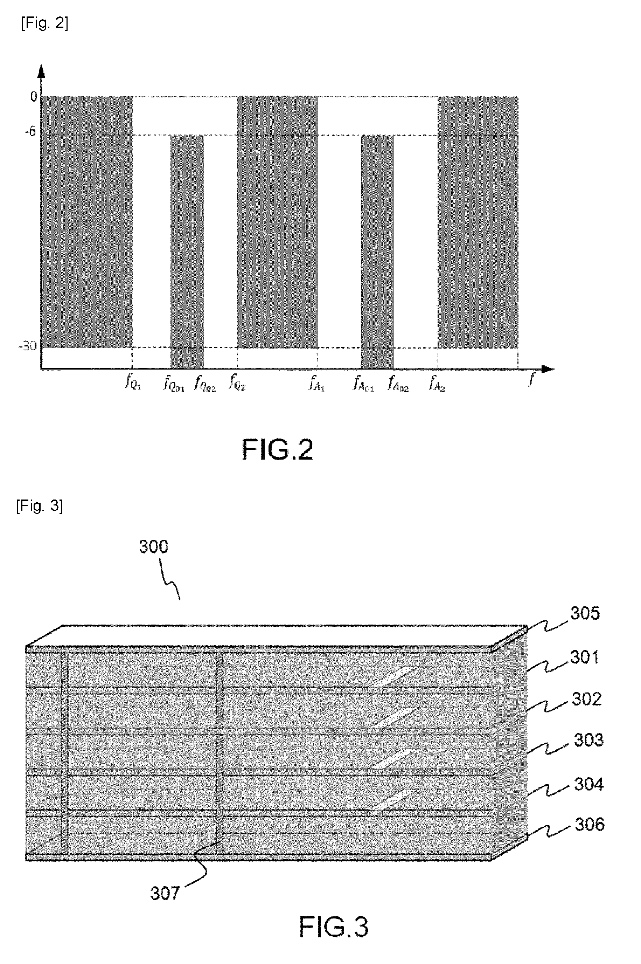

La figure 2 donne un exemple de gabarit de filtre analogique bi-bande 103 pouvant être utilisé pour la mise en oeuvre d'un récepteur bi-bande IFF/ADS-B où le filtrage est réalisé conjointement de manière analogique et numérique.

Ce gabarit est défini comme passant entre les fréquences $f_{Q1}$ = 1005 MHz et $f_{Q2}$ = 1055 MHz, qui comprend la bande de fréquences associée à la réception des signaux IFF. L'oscillation des signaux dans la sous bande $f_{Q01}$ = 1016 MHz à $f_{Q02}$ = 1044 MHz est limitée à 6dB, de manière à minimiser les déformations du signal IFF.

Ce filtre est également défini comme passant entre les fréquences $f_{A1}$ = 1065 MHz et $f_{A2}$ = 1115 MHz, qui comprend la bande de fréquences associée à la réception des signaux ADS-B. L'oscillation des signaux dans la sous bande $f_{A01}$ = 1076 MHz à $f_{A02}$ = 1104 MHz est limitée à 6dB, de manière à minimiser les déformations du signal ADS-B.

A l'extérieur de ces deux bandes de fréquences, le niveau de réjection du filtre est supérieur à 30 dB, en particulier dans la bande de fréquences 1055 MHz - 1063 MHz, afin d'assurer une réjection suffisante des signaux transmis dans cette bande pour éviter le phénomène de saturation du CAN.

Le gabarit de la figure 2 est donné à titre d'illustration uniquement. Il peut être modifié en fonction des performances recherchées, de l'efficacité des filtres numériques implémentés après le filtre analogique, des performances du convertisseur analogique-numérique, etc. Cependant, les valeurs de rejection prises dans l'exemple de la figure 2 constituent un bon compromis entre rejection des signaux indésirables, en particulier dans la bande comprise entre le signal IFF et le signal ADS-B, et compacité d'implémentation. La stabilité du signal recherchée dans les bandes passantes du filtre de la figure 2 résulte également d'un bon compromis entre déformations apportées au spectre des signaux utiles et complexité d'implémentation.

Plusieurs technologies de filtres permettent de réaliser des fonctions de filtrage analogique. On connait par exemple les technologies volumiques (filtres à cavités), les technologies planaires (filtres microruban (en anglais *microstrip)*, filtres coplanaires, filtres multicouches, filtres membranes) et les filtres SAW (acronyme anglais pour *Surface Acoustic Wave,* ou onde acoustique de surface) ou BAW (acronyme anglais pour *Bulk Acoustic Wave,* ou onde acoustique de volume).

L'invention porte sur un filtre en technologie planaire, et plus précisément sur un filtre multicouche. De tels filtres sont constitués d'une pluralité de couches diélectriques superposées. Ils présentent l'avantage d'avoir un encombrement extrêmement réduit, de très bonnes performances électriques, et d'être simples et peu chers à produire. La thèse de Y.Wu, E.Fourn, P.Besnier et C.Quendo, « Direct synthesis of multiband bandpass filters with generalized frequency transformation methods », IEEE Transactions on microwave theory and techniques, vol. 69, no. 8, pp. 3820-3831, Aug. 2021 décrit le principe de filtres planaires multi-bande.

La figure 3 représente la structure d'un filtre analogique bi-bande multicouche selon un mode de réalisation de l'invention. Ce filtre multicouche 300 présente plusieurs couches superposées 301 à 304, parmi lesquelles successivement :

- une première couche 301, comprenant un port d'entrée et un port de sortie permettant d'interfacer le filtre avec les autres éléments de la chaîne de réception,

- une deuxième couche 302, située directement sous la première couche, comprenant un plan de masse présentant des ouvertures en regard avec le port d'entrée et le port de sortie,

- une troisième couche 303 comprenant N résonateurs passe-bande (en anglais *band-pass resonator*), avec N supérieur à 1. Les résonateurs passe-bande sont reliés deux à deux par couplage électromagnétique, et

- une quatrième couche 304 comprenant N résonateurs coupe-bande (en anglais *band-stop resonator*). Chacun des N résonateurs coupe-bande est relié par couplage électromagnétique à un unique résonateur parmi les N résonateurs passe-bande.

La deuxième couche 302 a pour objet d'isoler la première couche 301, comprenant les ports du filtre, des couches 303 et 304, comprenant les N résonateurs passe-bande, de manière à éviter l'apparition d'interférences générées par effet de couplage non désiré, par exemple entre les ports d'entrée/sortie et les composants du filtre, ou entre les composants du filtre et des composants extérieurs, perturbations qui viendraient perturber la réponse fréquentielle du filtre. Les ouvertures réalisées dans le plan de masse de la couche 302 ont pour effet de permettre la liaison entre les résonateurs de la couche 303 et les ports d'entrée/sortie par couplage électromagnétique.

Dans ce mode de réalisation de l'invention, le premier résonateur des N résonateurs passe-bande de la couche 303 est relié par couplage électromagnétique avec le port d'entrée à travers une ouverture réalisée dans le plan de masse de la couche 302. De même, le dernier résonateur des N résonateurs passe-bande de la couche 303 est relié par couplage électromagnétique avec le port de sortie, à travers une ouverture réalisée dans le plan de masse de la couche 302.

Avantageusement, le filtre peut comprendre un plan de masse 305 situé au-dessus de la couche 301 comprenant les ports d'accès, et/ou un plan de masse 306 situé sous la couche 304 comprenant les résonateurs coupe-bande. Ces plans de masse, qui recouvrent toute la surface du filtre, permettent de le protéger contre des interférences liées à des éléments extérieurs au filtre. Avantageusement, ces plans de masse peuvent être reliés au plan de masse 302 par un trou métallisé traversant les couches (via) 307 de manière à ce que les plans de masse soient exactement au même potentiel.

Les différents composants du filtre bi-bande multicouche selon l'invention sont reliés entre eux par couplage électromagnétique. On entend par « reliés par couplage électromagnétique », le fait que deux éléments non reliés par des pistes conductrices soient disposés suffisamment proches pour induire un échange d'énergie entre eux. La valeur du coefficient de couplage dépend directement de la distance séparant les éléments et de la longueur des lignes situées en regard l'une de l'autre. Suivant leur agencement respectif, ils peuvent être couplés électriquement ou magnétiquement.

Relier les résonateurs et les ports d'entrée/sortie par couplage électromagnétique permet, entre autres, de simplifier la réalisation du filtre bi-bande multicouche selon l'invention, puisqu'il n'est pas nécessaire d'introduire des pistes métalliques entre les éléments d'une même couche, ou des trous métallisés entre les éléments de couches différentes. Sa complexité et son coût de fabrication sont donc réduits.

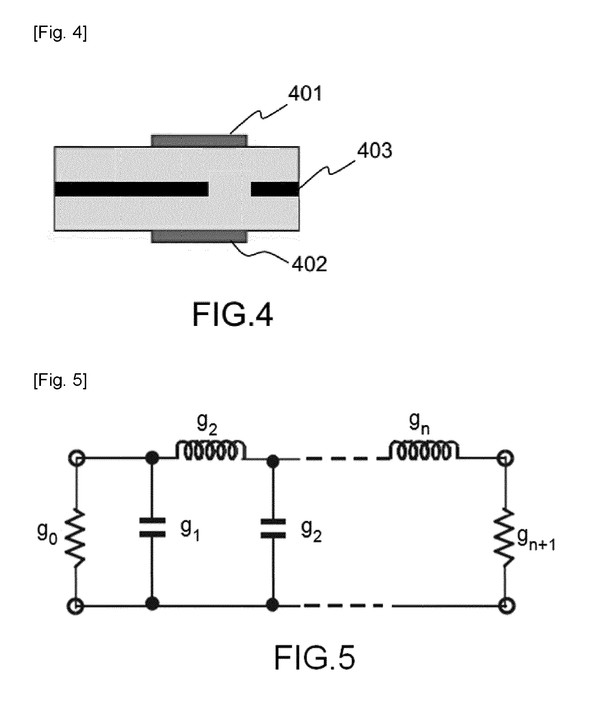

La figure 4 représente, à titre d'illustration, le principe du couplage entre éléments situés dans différentes couches d'un filtre multicouche, dans le cas de deux éléments séparés par un plan de masse présentant des ouvertures. La référence 401 désigne un port de la couche 301, par exemple le port d'entrée du filtre. La référence 402 désigne par exemple le premier résonateur des N résonateurs passe-bande de la couche 303. La référence 403 désigne le plan de masse de la couche 302. Le port 401 et le résonateur 402 sont situés en aplomb l'un au-dessus de l'autre, et le plan de masse 403 est interrompu entre ces deux éléments, de manière à permettre les effets de couplage. Le couplage est également possible entre des composants situés dans des couches adjacentes d'un filtre multicouche, en l'absence d'un plan de masse intercalaire.

Il est bien connu qu'un filtre passe-bas d'ordre N peut être représenté sous la forme d'inductances séries et de capacités parallèles, comme illustré à la figure 5.

Il est également connu que cette structure peut être modifiée, pour être représentée sous la forme de capacités parallèles uniquement, séparées par des inverseurs d'admittance, qui permettent de transformer des bobines série en capacités parallèles.

A partir du gabarit du filtre donné à la figure 2, et comme décrit dans la thèse d'Y.Wu citée précédemment, il est possible de déterminer la fonction de transfert d'un filtre bi-bande sous la forme :

$$\Omega = b_0 \left( \frac{\omega}{\omega_0} - \frac{\omega_0}{\omega} \right) - \frac{1}{b_1 \left( \frac{\omega}{\omega_1} - \frac{\omega_1}{\omega} \right)}$$

avec :

- $\Omega$ la fonction de transfert du filtre,
- $\omega_0$ et $b_0$ la fréquence de résonance et la susceptance, ou paramètre de pente, d'un résonateur passe-bande équivalent à la première partie de l'équation,
- $\omega_1$ et $b_1$ la fréquence de résonance et la susceptance, ou paramètre de pente, d'un résonateur coupe-bande équivalent à la deuxième partie de l'équation.

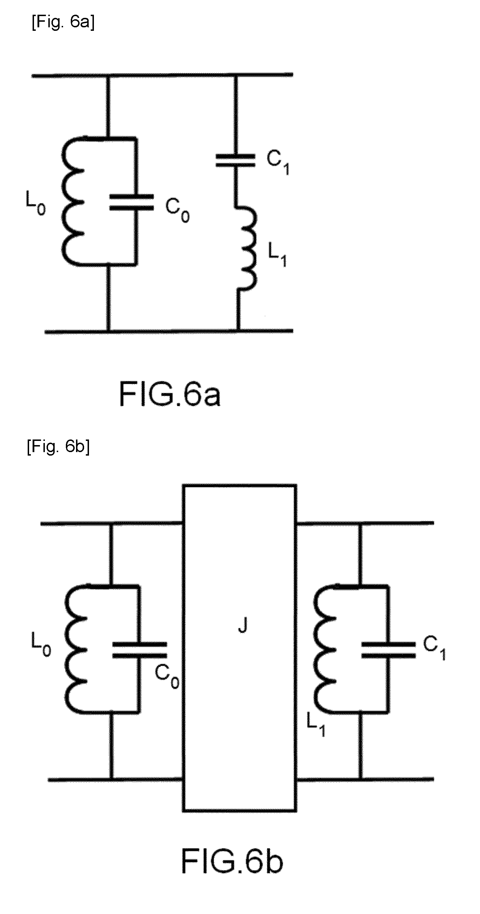

Ce résonateur bi-bande est composé d'un résonateur passe-bande, équivalent à une inductance et une capacité montées en parallèle, positionné en parallèle d'un résonateur coupe-bande, équivalent à une inductance et une capacité montées en série. La figure 6a illustre la structure équivalente d'un résonateur bi-bande, composé d'un résonateur passe-bande formé par la capacité $C_0$ et l'inductance $L_0$, monté en parallèle d'un résonateur coupe-bande formé par la capacité $C_1$ et l'inductance $L_1$.

Les valeurs des capacités et inductances $C_0$, $C_1$, $L_0$ et $L_1$ peuvent être obtenues par les formules suivantes :

$$L_0 = \frac{1}{b_0 C^{LP} \omega_0}$$

$$C_0 = \frac{1}{L_0 {\omega_0}^2}$$

$$L_1 = \frac{1}{b_1 C^{LP} \omega_1}$$

$$C_1 = \frac{1}{L_1 {\omega_1}^2}$$

où $C^{LP}$ est la valeur de la capacité du prototype passe-bas d'origine obtenue grâce aux coefficients de forme de Tchebychev ou de Butterworth associés à la réponse attendue.

En outre, le résonateur bi-bande de la figure 6a peut être transformé en celui de la figure 6b, pour ne comporter que des composants LC en parallèle, en introduisant un inverseur d'admittance d'impédance J, avec :

$$J = \sqrt{\frac{\beta_0 \beta_1}{b_0 b_1}}$$

avec $\beta_i = \omega_i C_i$.

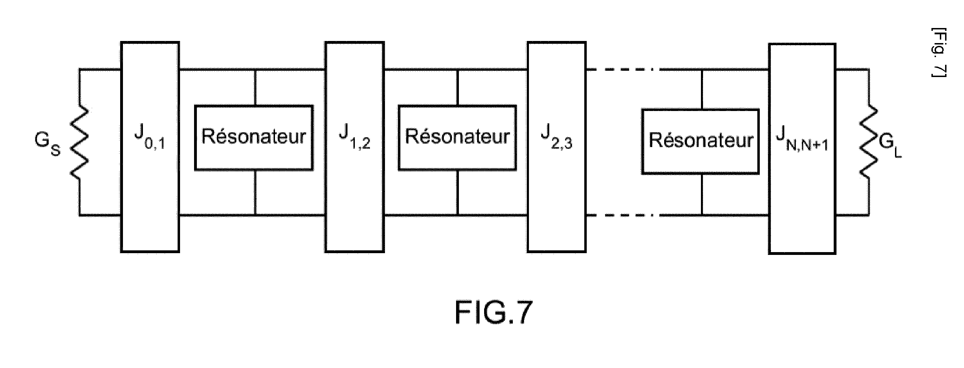

En reprenant la structure de filtre passe-bas en échelle de la figure 5, modifiée pour ne présenter que des capacités en parallèle séparées par des inverseurs 'd'admittance, et en utilisant le résonateur bi-bande de la figure 6b à la place des capacités parallèles, on obtient la structure d'un filtre bi-bande d'ordre N tel que représenté à la figure 7, avec $G_s$ l'impédance de la source et $G_L$ l'impédance de la charge.

Les impédances des inverseurs d'admittance valent respectivement :

$$J_{0,1} = \sqrt{\frac{G_S \beta_0}{b_0 g_0 g_1}}$$

$$J_{i,i+1} = \frac{1}{b_0} \sqrt{\frac{\beta_0^{\ 2}}{g_i g_{i+1}}}$$

$$J_{N,N+1} = \sqrt{\frac{G_L \beta_0}{b_0 g_N g_{N°1}}}$$

où les coefficients $g_i$ sont les coefficients de forme de Tchebychev ou Butterworth associés à la réponse attendue.

Ces étapes permettent d'exprimer un filtre bi-bande d'ordre N selon l'invention par une succession de filtres bi-bande parallèles séparés par des inverseurs d'admittance, chaque filtre bi-bande pouvant lui-même être vu comme un filtre passe-bande positionné en parallèle avec un inverseur d'admittance et un filtre coupe-bande, le filtre passe-bande et le résonateur coupe-bande étant représentés sous la forme d'un circuit LC parallèle.

En technologie microruban, un filtre LC parallèle peut être implémenté sous la forme d'un résonateur, c'est à dire d'une ligne ouverte de longueur $\lambda/4$ et d'impédance $Z$. Le paramètre $\lambda$ est la longueur d'onde dans le substrat, qui peut être dérivée directement de la fréquence de résonance $\omega_0$ du filtre passe-bande, ou $\omega_1$ du filtre coupe-bande. L'impédance Z d'une ligne de transmission sans pertes vaut approximativement $\sqrt{L/C}$. Cette impédance permet de calculer la largeur de la ligne de transmission, en fonction également du type de substrat. Ces paramètres permettent de déterminer les dimensions de lignes ouvertes utilisées pour implémenter les résonateurs du filtre bi-bande selon l'invention.

Une manière d'implémenter un inverseur d'admittance est de le remplacer par une ligne quart d'onde. Il est également possible de le remplacer par un circuit de couplage. Les coefficients de couplages sont liés aux impédances des inverseurs d'admittance.

L'invention propose d'implémenter un filtre bi-bande passant pour les bandes de fréquences associées aux signaux IFF et ADS-B (c'est-à-dire des bandes passantes centrées autour des fréquences 1030 MHz et 1090 MHz) tout en rejetant les autres fréquences, en particulier des fréquences intermédiaires à ces deux bandes. Si l'on se réfère au gabarit de la figure 2, cela signifie que le filtre bi-bande est passant au moins dans les bandes de fréquences allant de $f_{Q01}$ à $f_{Q02}$ et de $f_{A01}$ à $f_{A02}$, et qu'il rejette d'au moins 30 dB les signaux dont la fréquence est inférieure à $f_Q$, supérieur à $f_A$, et comprise entre $f_{Q2}$ et $f_{A1}$.

L'implémentation se fait au moyen d'un circuit multicouche composé de résonateurs équivalents à des circuits LC parallèles reliés par couplage électromagnétique, ce qui permet à la fois de s'affranchir de lignes de transmissions et ainsi de simplifier le design du filtre, et d'implémenter les inverseurs d'admittance nécessaires à la mise en oeuvre du filtre bi-bande selon l'invention.

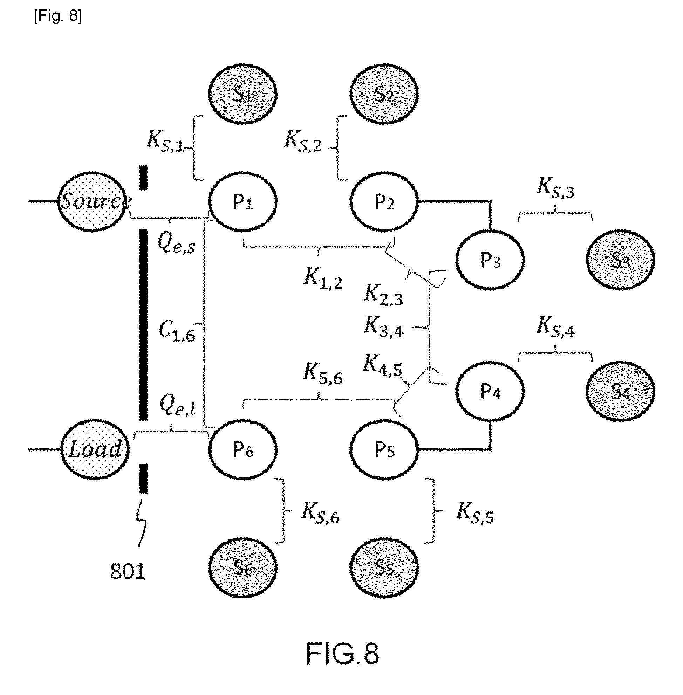

La figure 8 est un schéma de couplage d'un filtre bi-bande multicouche d'ordre $N = 6$ selon un mode de réalisation de l'invention. L'ordre du filtre est le résultat d'un compromis entre d'une part les performances du filtre (raideur des pentes du gabarit spectral, niveau de rejection, oscillation dans la bande) et d'autre part la surface occupée par le filtre. L'invention s'applique pour toute valeur de N supérieure ou égale à 1.

On y retrouve un port d'entrée (In) et un port de sortie (Out), reliés respectivement à une entrée (*Source*) et une sortie (*Load*) du filtre. Le filtre y est implémenté ici sous la forme de $N = 6$ résonateurs bi-bande comprenant chacun un résonateur passe-bande $P_i$ et un résonateur coupe-bande $S_i$. Les deux résonateurs sont associés par couplage, de coefficient $K_{s,i}$, de manière à remplacer l'inverseur d'admittance $J$ de la figure 6b. En pratique, on a $K_{s,i} = J$. Chaque résonateur passe-bande est relié par couplage à un autre résonateur passe-bande, avec un coefficient de couplage $K_{i,i+1}$, de manière à remplacer les inverseurs d'admittance d'impédance $J_{i,i+1}$, avec $i \in (1, N)$, de la figure 7. En pratique on a $K_{i,i+1} = J_{i,i+1}$.

On y retrouve également un port d'entrée (en anglais *Source*) et un port de sortie (en anglais *Load*), respectivement reliés par couplage électromagnétique au premier et au dernier des N résonateurs passe-bande. La liaison se fait par couplage, respectivement de coefficients $Q_{e,s}$ et $Q_{e,l}$ de manière à implémenter les inverseurs d'admittance $J_{0,1}$ et $J_{N,N+1}$ de la figure 7. Le couplage entre les ports d'entrée/sortie et les résonateurs passe-bande se fait à travers les ouvertures du plan de masse 801, et est ajusté en fonction des coefficients de couplage recherchés. En pratique, on a

$$Q_{e,s} = \left(\frac{1}{J_{0,1}}\right)^2 \text{ et } Q_{e,l} = \left(\frac{1}{J_{N,N+1}}\right)^2.$$

La structure multicouche du filtre bi-bande selon l'invention permet d'interfacer tous les résonateurs par effets de couplage en évitant les couplages parasites, ce qui serait difficile à réaliser sur un filtre monocouche. Elle permet également d'interfacer librement la position des ports d'entrée/sortie au regard des résonateurs, grâce au plan de masse isolant la couche comprenant les résonateurs passe-bande des ports d'entrée/sortie. Un autre avantage est de pouvoir ajuster le type de substrat de chaque couche, de manière à adapter les dimensions des lignes des différentes couches afin qu'elles aient des largeurs proches les unes des autres, ce qui permet de simplifier la conception du filtre et simplifie les couplages entre résonateurs de couches différentes.

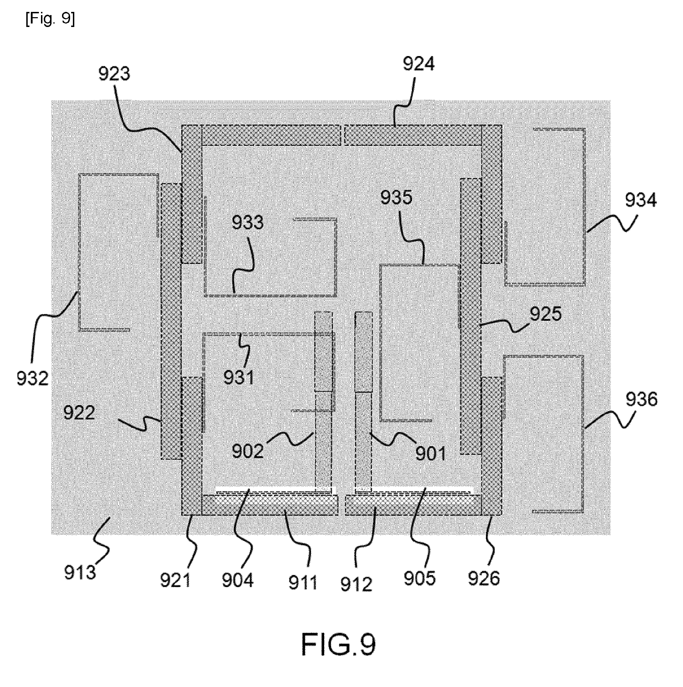

La figure 9 représente une vue de dessus d'un filtre bi-bande multicouche d'ordre $N = 6$ selon un mode de réalisation de l'invention, donné à titre d'illustration seulement, dans lequel les différentes couches sont représentées en surimpression. On y trouve un port d'entrée 901 et un port de sortie 902, et un plan de masse 913 recouvrant l'ensemble de la surface du filtre. Le plan de masse 913 présente deux ouvertures 911 et 912, positionnées entre des pistes métalliques 904 et 905 prolongeant les ports d'entrée sortie sur la couche 301, et des résonateurs passe-bande 921 et 926 positionnés sur la couche 303. Les ports d'entrée et les résonateurs passe-bande sont ainsi reliés deux à deux par effets de couplage. Les pistes métalliques 904 et 905 et le plan de masse 913 permettent de positionner les ports d'entrée/sortie 901 et 902 librement sur toute la surface du filtre.

Le filtre comprend également N = 6 résonateurs passe-bande 921 à 926, reliés deux à deux par effet de couplage électrique ou magnétique. Dans l'exemple, les résonateurs 921 et 922 sont reliés par couplage magnétique, tandis que les résonateurs 923 et 924 sont reliés par couplage électrique. Les $N = 6$ résonateurs forment ainsi une boucle entre le port d'entrée et le port de sortie. Les dimensions des résonateurs sont obtenues de manière théorique à partir du gabarit du filtre, comme décrit précédemment. Cependant, elles peuvent être ajustées à la marge pour pallier d'éventuelles imperfections lors de la réalisation du circuit ou d'éventuelles interférences non désirables. Leurs formes et positions sont choisies de manière à limiter l'encombrement du filtre tout en respectant les contraintes de couplage entre éléments.

Le filtre comprend également N = 6 résonateurs coupe-bande 931 à 936. Chaque résonateur coupe-bande est positionné de manière à être relié à un unique résonateur passe-bande 921 à 926 par couplage électrique ou magnétique. Dans l'exemple de la figure 9, le résonateur coupe-bande 931 est relié par couplage magnétique au résonateur passe-bande 921, etc... Les dimensions des résonateurs coupe-bande sont obtenues de manière théorique à partir du gabarit du filtre, comme décrit précédemment, et peuvent être ajustées à la marge. Leurs formes et positions sont choisies de manière à limiter l'encombrement du filtre tout en respectant les contraintes de couplage entre éléments, en particulier l'absence de couplage significatif entre résonateurs coupe-bande.

Dans l'exemple de la figure 9, les résonateurs sont des résonateurs à extrémités ouvertes (en anglais *open-end resonators*). Cependant, l'invention s'applique pour tout type de résonateurs, comme par exemple des résonateurs à tronçons de ligne ouverte (en anglais *open-stub resonators*), des résonateurs en anneaux (en anglais *ring resonators*), etc.

De manière avantageuse, dans un mode de réalisation d'un filtre bi-bande IFF/ADS-B selon l'invention, deux des résonateurs passe-bande non consécutifs sont reliés par effet de couplage. Dans l'exemple de la figure 9, il s'agit du résonateur passe-bande 921 et du résonateur passe-bande 926, dont les extrémités sont rapprochées de manière à ce qu'ils soient reliés par couplage électrique avec un coefficient de couplage correspondant à $C_{1,6}$ sur la figure 8. En effet, le couplage de résonateurs passe-bande non consécutifs de la série de résonateurs passe-bande permet de créer des zéros dans la réponse fréquentielle du filtre bi-bande.

Les zéros d'un filtre constituent les fréquences pour lesquelles l'atténuation théorique du filtre est infinie. Le filtre bi-bande multicouche selon l'invention utilise le couplage entre deux résonateurs passe-bande non consécutifs de la couche 303 pour augmenter la pente de la réponse fréquentielle sur les bords du filtre. Les autres résonateurs non consécutifs du filtre sont disposés de manière suffisamment éloignée pour ne pas générer d'effets de couplage significatifs.

Dans l'exemple de la figure 9, le résonateur 921 et le résonateur 926, qui constituent le premier et le dernier de la série des résonateurs passe-bande, sont reliés par couplage électromagnétique. Cependant, d'autres couples de résonateurs passe-bande non consécutifs permettent de produire des résultats équivalents.

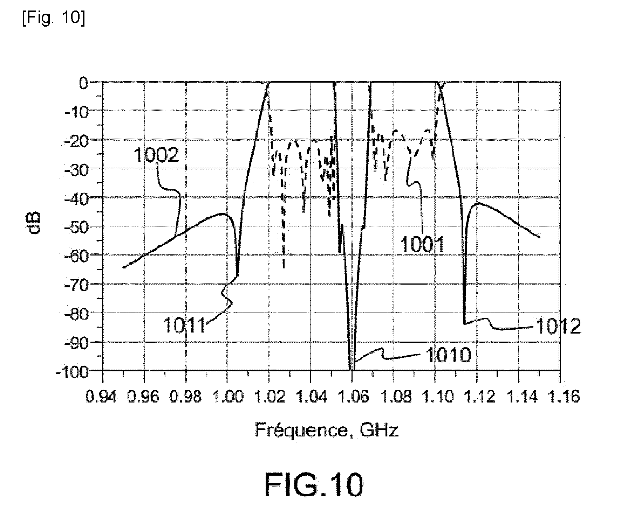

La figure 10 représente la réponse fréquentielle théorique du filtre bi-bande multicouche selon le mode de réalisation de l'invention représenté à la figure 9. La courbe 1001 représente le coefficient de réflexion du filtre, ou S11, en fonction de la fréquence. La courbe 1002 représente l'atténuation du filtre, ou S21, en fonction de la fréquence.

On constate que ce filtre est conforme au gabarit spectral représenté à la figure 2, c'est-à-dire qu'il présente une rejection supérieure à 30 dB pour les fréquences inférieures à 1005 MHz (en pratique, celles inférieures à 1100 MHz), pour les fréquences supérieures à 1115 MHz, et dans la bande de fréquence intermédiaire 1055 MHz - 1065 MHz.

En plus des zéros liés à la réponse du filtre bi- bande, tel que le zéro 1010 proche de la fréquence 1060 Hz, le filtre présente deux zéros 711 et 712 situés sur les bords de la bande passante du filtre, liés au couplage entre deux résonateurs passe-bande non consécutifs P1 et P2, et qui ont pour effet de rendre plus raide la pente du filtre, permettant ainsi d'atteindre rapidement des niveaux de rejection élevés en dehors des deux bandes de fonctionnement IFF et ADS-B. Ces zéros sont symétriques par rapport à la bande centrale du filtre (soit 1060 MHz). En pratique, la distance entre les résonateurs passe-bande non consécutifs couplés pour générer ces zéros est ajustée empiriquement, en simulations, de manière à obtenir la position optimale des zéros.

Le filtre selon l'invention peut donc être positionné en tête de réception d'un dispositif configuré pour traiter simultanément des signaux IFF et des signaux ADS-B. Il permet de rejeter significativement les signaux transmis dans les fréquences adjacentes, en particuliers ceux transmis dans la bande de fréquences située entre les signaux IFF (1030 MHz) et les signaux ADS-B (1090 MHz). Il peut donc être utilisé pour mettre en oeuvre une chaîne de réception commune IFF/ADS-B satisfaisant des exigences strictes de réjection, en particulier les normes DO-260, AIMS 03-1000 et ED73.

Le filtre selon l'invention présente une très bonne réjection des signaux hors bande, une très bonne réponse dans les bandes d'intérêt et une bonne sélectivité, avec un volume réduit, et ce grâce à la combinaison des techniques suivantes :

- une structure multicouche, permettant de concevoir des filtres de tailles réduites et d'agencer facilement des éléments reliés par effets de couplage,

- la liaison des composants (ports et résonateurs) par effets de couplage, permettant de limiter au strict minimum les composants du filtre et de supprimer tous les éléments métalliques (pistes, vias) nécessaires pour relier les composants entre eux, et donc de réduire le volume et la consommation du filtre,

- l'ajout de couplages spécifiques entre résonateurs, permettant de positionner des zéros dans la réponse fréquentielle du filtre de manière à augmenter sa sélectivité en fréquence.

## Revendications

**1.** Filtre analogique bi-bande (300) configuré pour être passant pour des signaux IFF reçus dans une première bande de fréquence ($f_{Q01}$ - $f_{Q02}$) centrée sur la fréquence 1030 MHz et des signaux ADS-B reçus dans une deuxième bande de fréquence ($f_{A01}$ - $f_{A02}$) centrée sur la fréquence 1090 MHz, et pour rejeter des signaux reçus en dehors de la première bande de fréquence et de la deuxième bande de fréquence, en particulier au moins une bande de fréquence ($f_{Q2}$ - $f_{A1}$) comprise entre la première et la deuxième bande de fréquence, ledit filtre analogique bi-bande étant réalisé en technologie multi-planaire, et étant **caractérisé en ce qu'**il comprend une pluralité de couches superposées parmi lesquelles successivement :

- une première couche (301) comprenant un port d'entrée (901) et un port de sortie (902),
- une deuxième couche (302) comprenant un plan de masse présentant des ouvertures (911, 912) en regard avec le port d'entrée et le port de sortie,
- une troisième couche (303) comprenant N résonateurs passe-bande (921 à 926), avec N supérieur ou égal à 1,
- une quatrième couche (304) comprenant N résonateurs coupe-bande (931 à 936),

et **en ce que** les éléments desdites couches sont disposés de sorte que :

- les N résonateurs passe-bande sont reliés deux-à-deux par couplage électromagnétique ($K_{1,2}$, $K_{2,3}$, $K_{3,4}$, $K_{4,5}$, $K_{5,6}$),
- le premier résonateur des N résonateurs passe-bande est relié par couplage électromagnétique ($Q_{e,s}$) avec le port d'entrée,
- le dernier résonateur des N résonateurs passe-bande est relié par couplage électromagnétique ($O_{e,l}$) avec le port de sortie,
- chaque résonateur passe-bande est relié par couplage électromagnétique ($K_{S,1}$, $K_{S,2}$, $K_{S,3}$, $K_{S,4}$, $K_{S,5}$, $K_{S,6}$) à un desdits résonateurs coupe-bande.

**2.** Filtre analogique bi-bande selon la revendication 1, dans lequel les dimensions des résonateurs passe-bande et des résonateurs coupe-bande sont choisies de manière à ce que chaque couple de résonateur passe-bande/coupe-bande forme un résonateur bi-bande configuré pour être passant dans lesdites première et deuxième bande de fréquence, et pour rejeter des signaux reçus en dehors de ces deux bandes de fréquences, en particulier dans la bande de fréquence comprise entre la premier et la deuxième bande de fréquence.

**3.** Filtre analogique bi-bande selon l'une des revendications précédentes, où N est supérieur ou égal à 3, et dans lequel deux résonateurs passe-bande non consécutifs (921/926, P1/P6) parmi les N résonateurs passe-bande sont reliés par couplage électromagnétique ($C_{1,6}$).

**4.** Filtre analogique bi-bande selon la revendication 3, dans lequel l'écart entre les deux résonateurs passe-bande non consécutifs reliés par couplage électromagnétique est choisi de manière à former des zéros (1011, 1012) dans la réponse impulsionnelle du filtre positionnés de manière à augmenter la pente sur les bords du filtre bi-bande.

**5.** Filtre analogique bi-bande selon l'une des revendications 3 et 4, dans lequel les deux résonateurs passe-bande non consécutifs reliés par couplage électromagnétique sont le premier (921, P1) et le dernier (926, P6) résonateur passe-bande.

6. Filtre analogique bi-bande selon l'une des revendications précédentes, configuré pour rejeter d'au moins 30 dB les signaux reçus dans ladite bande de fréquence ($f_{Q2}$ - $f_{A1}$) comprise entre la première et la deuxième bande de fréquence.

[Fig. 1]

FIG.1

[Fig. 2]

FIG.2

[Fig. 3]

FIG.3

[Fig. 4]

FIG.4

[Fig. 5]

FIG.5

[Fig. 6a]

FIG.6a

[Fig. 6b]

FIG.6b

[Fig. 7]

FIG.7

[Fig. 8]

FIG.8

[Fig. 9]

FIG.9

[Fig. 10]

FIG.10

| Europäisches Patentamt / European Patent Office / Office européen des brevets | **RAPPORT DE RECHERCHE EUROPEENNE** | Numéro de la demande EP 23 21 8085 |
|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 6 470 173 B1 (OKADA TAKAHIRO [JP] ET AL) 22 octobre 2002 (2002-10-22) * colonne 4 - colonne 5; figures 5, 7, 9 * ----- | 1-6 | INV. H01P1/203 |
| A | VIKRAM SEKAR ET AL: "A novel compact dual-band half-mode substrate integrated waveguide bandpass filter", MICROWAVE SYMPOSIUM DIGEST (MTT), 2011 IEEE MTT-S INTERNATIONAL, IEEE, 5 juin 2011 (2011-06-05), pages 1-4, XP032006680, DOI: 10.1109/MWSYM.2011.5972733 ISBN: 978-1-61284-754-2 * figures 4,5 * ----- | 1-6 | |
| A | US 2015/214594 A1 (ZHOU BO [CN] ET AL) 30 juillet 2015 (2015-07-30) * alinéa [0007] - alinéa [0025]; figures 1, 2 * ----- | 1 | DOMAINES TECHNIQUES RECHERCHES (IPC) H01P |

Le présent rapport a été établi pour toutes les revendications

| Lieu de la recherche | Date d'achèvement de la recherche | Examinateur |
|---|---|---|
| La Haye | 29 avril 2024 | Hueso González, J |

**ANNEXE AU RAPPORT DE RECHERCHE EUROPEENNE
RELATIF A LA DEMANDE DE BREVET EUROPEEN NO.**

EP 23 21 8085

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-04-2024

| Document brevet cité au rapport de recherche | | Date de publication | Membre(s) de la famille de brevet(s) | | Date de publication |
|---|---|---|---|---|---|
| US 6470173 | B1 | 22-10-2002 | JP | 3458720 B2 | 20-10-2003 |
| | | | JP | 2000114807 A | 21-04-2000 |
| | | | US | 6470173 B1 | 22-10-2002 |
| US 2015214594 | A1 | 30-07-2015 | EP | 2865046 A1 | 29-04-2015 |
| | | | US | 2015214594 A1 | 30-07-2015 |
| | | | WO | 2013189072 A1 | 27-12-2013 |

EPO FORM P0460

Pour tout renseignement concernant cette annexe : voir Journal Officiel de l'Office européen des brevets, No.12/82

## EP 4 395 063 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2214616

**Littérature non-brevet citée dans la description**

- **Y.WU ; E.FOURN ; P.BESNIER ; C.QUENDO.** Direct synthesis of multiband bandpass filters with generalized frequency transformation methods. *IEEE Transactions on microwave theory and techniques,* Août 2021, vol. 69 (8), 3820-3831